# EUROPEAN PATENT APPLICATION

(11) **EP 4 772 313 A1**
(43) Date of publication of application: **08.07.2026**
(21) Application number: 23950888.0
(22) Date of filing: 01.09.2023
(51) Int. Cl.: B25J 11/00, B25J 5/00, B25J 9/00, B25J 13/08, B25J 19/02, B66F 7/14, B65G 41/00

(54) **ROBOT**

(71) Applicant: Bear Robotics Korea, Inc., Seoul 04779 (KR)
(72) Inventor: LEE, Haklim, Seoul 06772 (KR); CHEON, Jeeyoung, Seoul 06772 (KR)
(74) Representative: Murgitroyd & Company
(86) International application number: PCT/KR2023/013054
(87) International publication number: WO 2025/048013

(57) **Abstract**

A robot is disclosed. The robot of the present disclosure may comprise: a base having wheels; a tray spaced apart from the base; and a lift assembly for supporting, on the base, the tray, wherein the lift assembly can include: a motor mounted on the base; a gear fixed to a rotary shaft of the motor; a lead screw which is elongated, and which can engage with the gear and rotate; a guide shaft which is spaced apart from the lead screw in the direction intersecting with the longitudinal direction of the lead screw, and which extends in the longitudinal direction of the lead screw; and a slider coupled to the lead screw and the guide shaft so as to be movable in the longitudinal direction of the lead screw, and the tray is coupled to the slider and can move in the longitudinal direction of the lead screw together with the slider.

## Description

### [Technical Field]

The present disclosure relates to a robot. In particular, the present disclosure relates to a robot used to carry an object such as a box.

### [Background]

Robots are machines that have the ability to work on their own. Robots have accounted for a significant portion of production automation, and have developed into intelligent robots until recently. An intelligent robot refers to a robot that autonomously recognizes the external environment, determines the situation, and executes necessary tasks.

Intelligent robots may be largely divided into industrial robots and service robots. Unlike conventional industrial robots that perform tasks in an environment isolated from humans, cooperative robots may assist humans in the same space as the space in which the humans are positioned or replace human tasks. These cooperative robots increase productivity by physically interacting with humans in the same space as the space in which the humans are located, and performing tasks. Service robots are improving the convenience of human life by providing various services in social infrastructure. Recently, many studies on such intelligent robots have been conducted.

In particular, a sorting robot of the distribution center is used to move an object to a specific place. However, the conventional sorting robot has a problem in that the height thereof is fixed and its usability is poor.

### [Summary]

### [Technical Purpose]

The present disclosure aims to solve the above-described problems and other problems.

Another purpose of the present disclosure may be to provide a robot capable of moving an object to a specific location.

Still another purpose of the present disclosure may be to provide a robot capable of freely adjusting a vertical level of a tray on which objects are loaded.

Still yet another purpose of the present disclosure may be to provide a robot capable of placing a loaded object thereon onto a specific location.

Still yet another purpose of the present disclosure may be to provide a robot capable of detecting the presence or absence of an object on a tray.

### [Technical Solution]

According to an aspect of the present disclosure to achieve the above or other objects, a robot may include a base having a wheel; a tray spaced apart from the base; and a lift assembly disposed on the base so as to support the tray, wherein the lift assembly may include: a motor mounted in the base; a gear fixed to a rotation shaft of the motor; a lead screw extending longitudinally and rotatable in engagement with the gear; a guide shaft spaced apart from the lead screw in a direction intersecting a longitudinal direction of the lead screw and extending in the longitudinal direction of the lead screw; and a slider coupled to the lead screw and the guide shaft so as to be movable in the longitudinal direction of the lead screw, wherein the tray may be coupled to the slider and may be movable in the longitudinal direction of the lead screw together with movement of the slider.

### [Advantageous Effects]

Effects of the robot according to the present disclosure will be described as follows.

According to at least one of embodiments of the present disclosure, provided may be a robot capable of moving an object to a specific location.

According to at least one of the embodiments of the present disclosure, provided may be a robot capable of freely adjusting the vertical level of a tray on which objects are loaded.

According to at least one of the embodiments of the present disclosure, provided may be a robot capable of putting a loaded object on a specific position.

According to at least one of the embodiments of the present disclosure, provided may be a robot capable of detecting the presence or absence of an object on a tray.

Additional scope of applicability of the present disclosure will become apparent from the following detailed description. However, since various changes and modifications within the spirit and scope of the present disclosure may be clearly understood by those skilled in the art, it should be understood that specific embodiments such as the detailed description and preferred embodiments of the present disclosure are given only as examples.

### [Brief Description of Drawings]

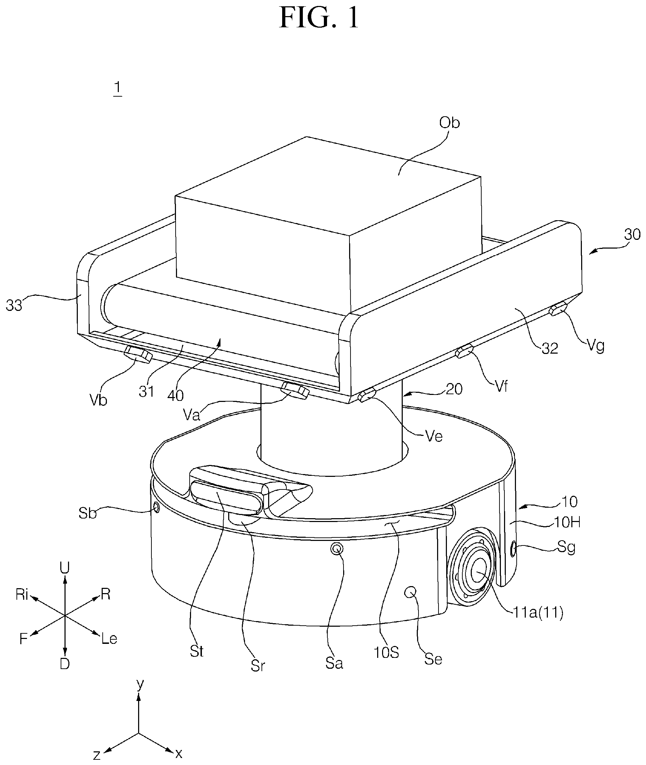

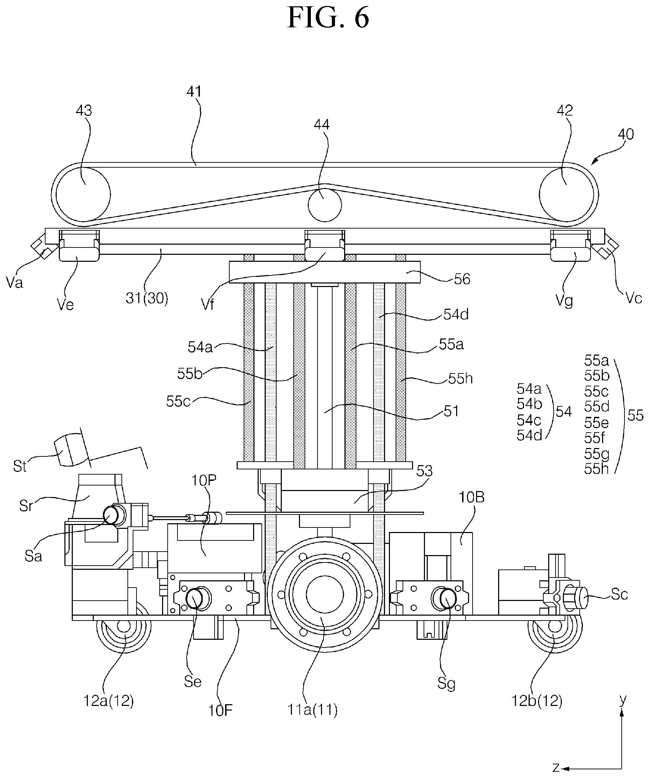

FIGS. 1 to 16 are diagrams illustrating examples of a robot according to embodiments of the disclosure.

### [Best Mode]

Hereinafter, embodiments disclosed in the present specification will be described in detail with reference to the accompanying drawings, and the same or similar components are given the same reference numerals regardless of the reference numerals, and redundant descriptions thereof will be omitted.

The suffixes "module" and "unit" for the components used in the following description are given or used interchangeably in consideration of only the ease of writing the specification, and do not have meanings or roles that are distinguished from each other by itself.

In addition, in describing the embodiments disclosed in the present specification, when it is determined that a detailed description of related known technologies may obscure the gist of the embodiments disclosed in the present specification, the detailed description thereof will be omitted. In addition, the accompanying drawings are only for easily understanding the embodiments disclosed in the present specification, and the technical spirit disclosed in the present specification is not limited by the accompanying drawings, and it should be understood that all changes, equivalents, and substitutes included in the spirit and technical scope of the present disclosure are included.

Terms including ordinals, such as first and second, may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or there may be still another component therebetween. On the other hand, when it is stated that a component is "directly connected" or "directly coupled" to another component, it should be understood that still another component does not exist therebetween.

As used herein, the singular constitutes "a" and "an" are intended to include the plural constitutes as well, unless the context clearly indicates otherwise.

In the present application, it should be understood that terms such as "include" or "have" are intended to designate the presence of features, numbers, steps, operations, components, parts, or combinations thereof described in the specification, and do not preclude the presence or addition of one or more other features, numbers, steps, operations, components, parts, or combinations thereof

The direction indication of the upper (U, y), the lower (D), the left (Le, x), the right (Ri), the front (F, z), and the rear (R) shown in the drawings is only for convenience of illustration, and the technical idea disclosed in the present specification is not limited thereto.

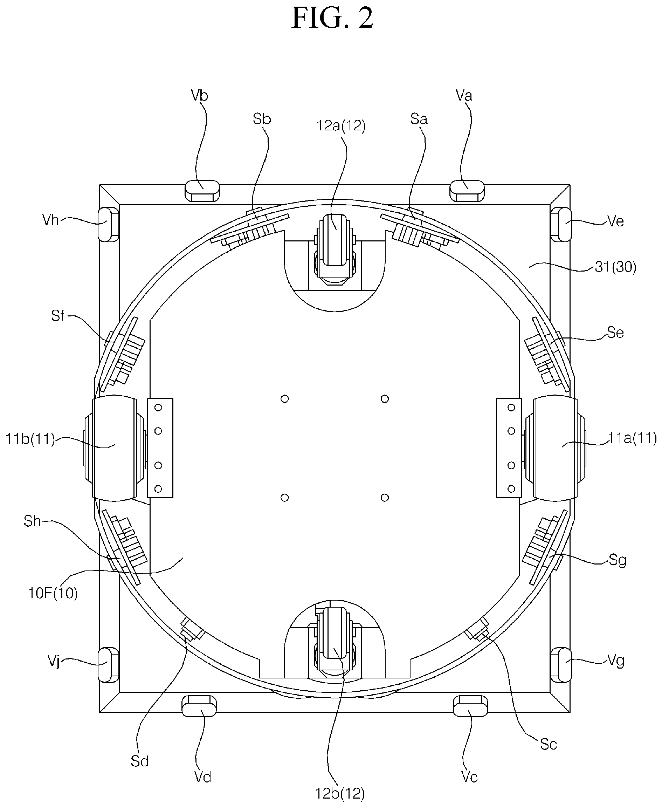

Referring to FIGS. 1 and 2, a robot 1 may include a base 10, a pole 20, and a conveyor 30 and 40. The robot 1 may be referred to as a sorting robot 1, a delivery robot 1, or a logistics robot 1.

The base 10 may constitute a lower portion of the robot 1. The base 10 may have generally a rounded or angled block or box shape, and may be referred to as a body 10 or a cart 10. The base 10 may include a frame 10F constituting a bottom of the base 10 and a casing 10H constituting an outer appearance of the base 10.

The pole 20 may extend upwards from the base 10. For example, the pole 20 may be located at the center of the base 10 and have generally a cylindrical shape.

The tray 30 and 40 may be opposite to the base 10 with respect to the pole 20 disposed therebetween and may be coupled to the pole 20. For example, an upper end of the pole 20 may be located at a center of the tray 30 and 40, and the tray 30 and 40 may extend in a direction intersecting the pole 20. The user may place an object Ob such as a box on the tray 30 and 40. The tray 30 and 40 may be referred to as a rack 30 and 40 or a head 30 and 40.

A wheel may be mounted on the frame 10F and be positioned under the frame 10F and may rotate. A driving wheel 11 may be mounted on the frame 10F and may include an in-wheel motor. For example, a first driving wheel 11a may be adjacent to a circumference of the frame 10F, and a second driving wheel 11b may be opposite to the first driving wheel 11 with respect to a center of the frame 10F. A sub-wheel 12 may be mounted on the frame 10F and may be rotated according to the movement of the base 10 under the rotation of the driving wheel 11. The sub-wheel 12 may be a caster wheel. For example, a first sub-wheel 12a may be positioned between the first driving wheel 11F and the second driving wheel 11a in the circumferential direction (i.e., the circumferential direction) of the frame 10b, and the second sub-wheel 12b may be opposite to the first sub-wheel 12a with respect to the center of the frame 10F.

Accordingly, the robot 1 may move on the ground using the wheels 11 and 12. The base 10 including the wheels 11 and 12 may be referred to as a moving base 10.

The robot 1 may include at least one sensor for detecting an object or a terrain around the robot 1. The sensor will be described in detail as follows.

A lidar Sr may be mounted in a groove 10S formed in the front portion of the base 10 and may sense the surrounding around the robot 1. The groove 10S may be formed in an arc shape in a side surface of the casing 10H of the base 10. For example, the groove 10S may extend by at about 180 degrees.

An upper sensor St may be mounted on top of the base 10, and may detect an object in front of the upper sensor St. The upper sensor St may be located on top of the lidar Sr and may face in a frontward direction of the base 10. The upper sensor St may be a TOF camera (Time of Flight camera).

A middle sensor Sa, Sb, Sc, and Sd may be mounted on a side surface of the casing 10H of the base 10, and may detect an object in front of the middle sensor Sa, Sb, Sc, and Sd. The middle sensor Sa, Sb, Sc, and Sd may be positioned under the groove 10S, and may sense the surrounding around the base 10. A plurality of middle sensors Sa, Sb, Sc, and Sd may be spaced apart from each other in the circumferential direction of the casing 10H of the base 10. The first middle sensor Sa and the second middle sensor Sb may be spaced apart from each other while being disposed at the front portion of the base 10, and the third middle sensor Sc and the fourth middle sensor Sd may be spaced apart from each other while being disposed at the rear portion of the base 10. The middle sensor Sa, Sb, Sc, and Sd may be a depth camera that senses a distance (depth) of an object in front of the middle sensor Sa, Sb, Sc, and Sd.

A lower sensor Se, Sf, Sg, and Sh may be mounted on the side surface of the casing 10H of the base 10, and may detect an object in front of the lower sensor Se, Sf, Sg, and Sh. The lower sensor Se, Sf, Sg, and Sh may be positioned under the middle sensors Sa, Sb, Sc, and Sd, and may sense the surroundings around the base 10. A plurality of lower sensors Se, Sf, Sg, and Sh may be spaced apart from each other in the circumferential direction of the casing 10H of the base 10. The first lower sensor Se and the second lower sensor Sf may be spaced apart from each other with the first and second middle sensors Sa and Sb interposed therebetween. The third lower sensor Sg and the fourth lower sensor Sh may be spaced apart from each other with the third and fourth middle sensors Sc and Sd interposed therebetween. The lower sensor Se, Sf, Sg, and Sh may be an ultrasonic sensor that senses an object in front of the lower sensor Se, Sf, Sg, and Sh.

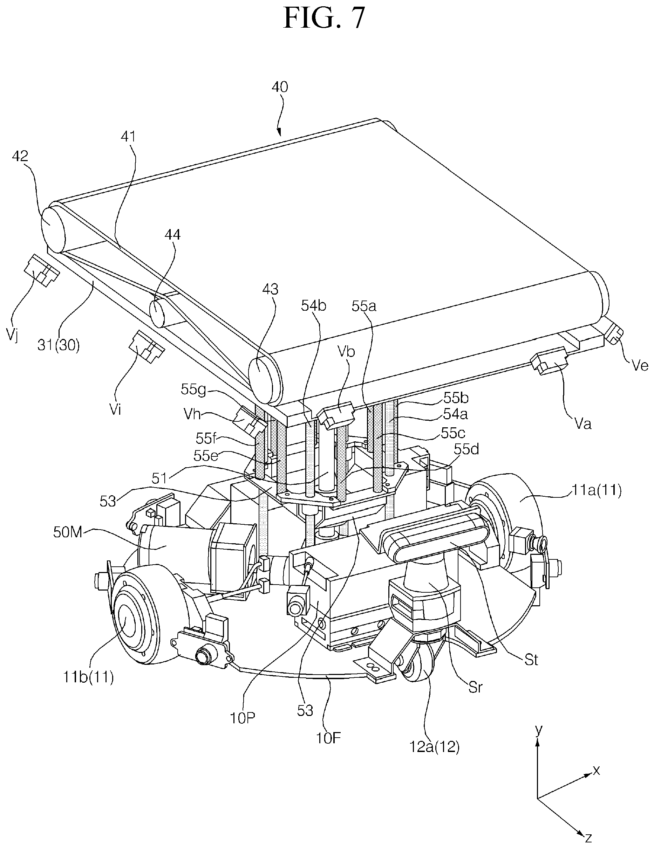

A proximity sensor Va, Vb, Vc, Vd, Ve, Vf, Vg, Vh, Vi, and Vj (see FIGS. 1 and 7) may be mounted on an edge of the tray 30 and 40, and may detect an approaching object. The proximity sensor Va, Vb, Vc, Vd, Ve, Vf, Vg, Vh, Vi, and Vj may face obliquely downwardly of the tray 30 and 40. A plurality of proximity sensors Va, Vb, Vc, Vd, Ve, Vf, Vg, Vh, Vi, and Vj may be spaced apart from each other along the edge of the tray 30 and 40. The tray 30 and 40 may include a supporter 30 having a quadrangular plate shape constituting the bottom of the tray 30 and 40. The first proximity sensor Va and the second proximity sensor Vb may be mounted on the front side of the supporter 30 and spaced apart from each other along the front side. The third proximity sensor Vc and the fourth proximity sensor Vd may be mounted on the rear side of the supporter 30 and spaced apart from each other along the rear side. The fourth proximity sensor Ve, the fifth proximity sensor Vf, and the sixth proximity sensor Vg may be mounted on the left side of the supporter 30 and spaced apart from each other along the left side. The seventh proximity sensor Vh, the eighth proximity sensor Vi, and the ninth proximity sensor Vj may be mounted on the right side of the supporter 30 and spaced apart from each other along the right side. For example, the proximity sensor Va, Vb, Vc, Vd, Ve, Vf, Vg, Vh, Vi, and Vj may include a light emitter emitting light of an infrared wavelength band and a light receiver receiving light reflected from the object, and detect the presence or absence of the object approaching the proximity sensor.

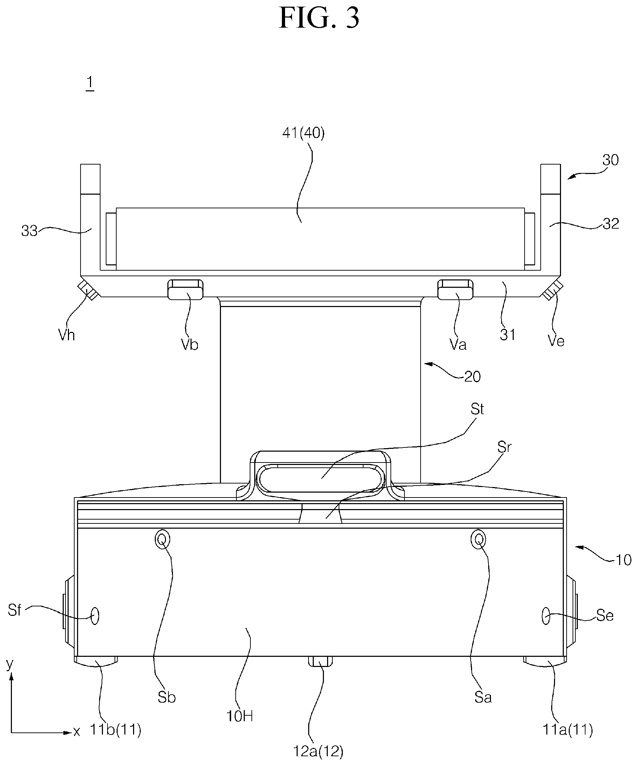

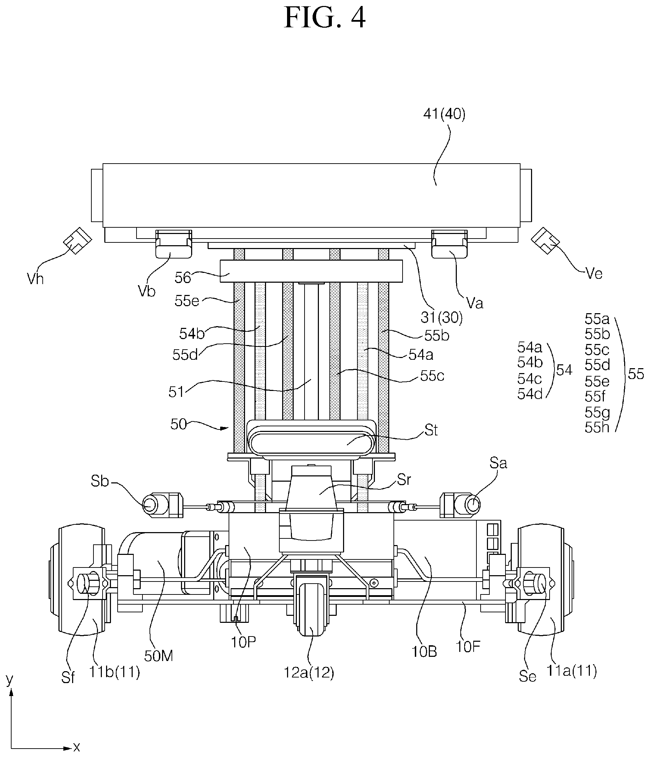

Referring to FIGS. 3 and 4, various electronic components 10P such as a battery 10B and a printed circuit board (PCB) may be mounted on the frame 10F of the base 10. The casing 10H of the base 10 may cover components embedded in the base 10.

A charging terminal (not shown) may be mounted on the base 10 and may be connected to the battery 10B. The battery 10B may be charged by an external power source connected to the charging terminal, and the robot 1 may be driven using the power of the battery 10B. That is, the battery 10B may provide power to the components of the robot 1, such as the driving wheel 11, the electronic components 10P such as the sensors described above and below, a controller, and a motor 50M.

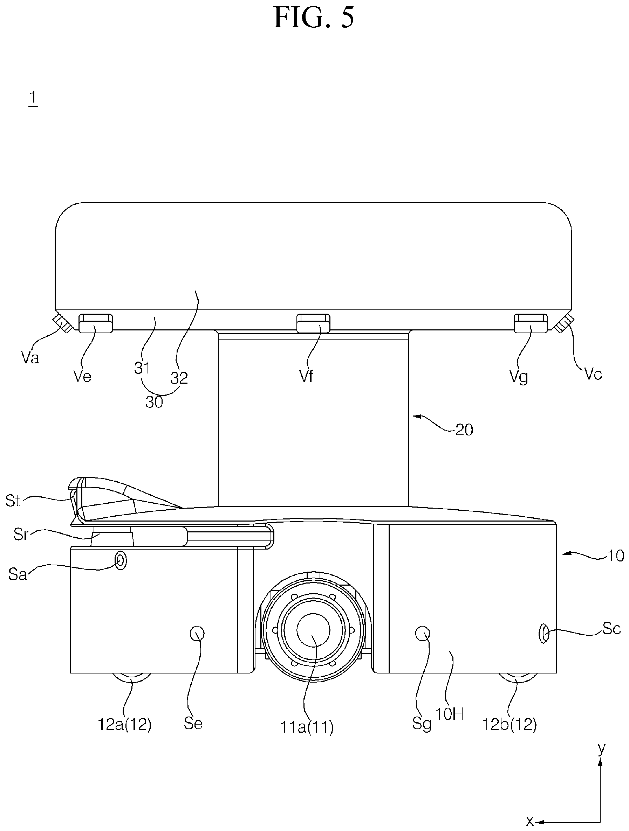

Referring to FIGS. 5 to 7, the tray 30 and 40 may include the supporter 30 and a conveyor 40.

The plate 31 of the supporter 30 may constitute the bottom of the supporter 30. The plate 31 may have the quadrangular plate shape. The plate 31 may be referred to as a top plate 31. A first rib 32 (see FIG. 1) may be bent upwardly from the left side of the plate 31, and may extend along the left side. A second rib 33 (see FIG. 1) may be bent upwardly from the right side of the plate 31 and extend along the right side.

The conveyor 40 may be positioned on top of the plate 31 and may be positioned between the first rib 32 and the second rib 33 (see FIG. 1). The conveyor 40 may include a conveyor belt 41, a head pulley 42, a tail pulley 43, and a bend pulley 44. Each of the head pulley 42, the tail pulley 43, and the bend pulley 44 may be disposed between the first rib 32 and the second rib 33 and may extend longitudinally in a direction intersecting the first rib 32 and the second rib 33. The head pulley 42, the tail pulley 43, and the bend pulley 44 may be spaced apart from each other in a direction intersecting the longitudinal direction of each of the pulleys 42, 43, and 44. The pulleys 42, 43, and 44 may be coupled to the first rib 32 and the second rib 33 so as to be rotatable respectively about rotation axes thereof parallel to each other. The conveyor belt 41 may be wound around the head pulley 42 and the tail pulley 43, and the bend pulley 44 may be disposed between the head pulley 42 and the tail pulley 43 and may bend the outer surface of the conveyor belt 41. For example, the pulleys 42 and 43 may be gear-connected to or in close contact with the conveyor belt 41. A drive motor of the conveyor 40 may rotate the head pulley 42, and the conveyor belt 41 and the remaining pulleys 43 and 44 may be rotated under the rotation of the head pulley 42.

Accordingly, the conveyor 40 may move the object placed on the conveyor belt 41 in a first direction (z-axis direction) or in a second direction (an opposite direction to the z-axis direction) opposite to the first direction.

Referring back to FIGS. 3 and 4, a lift assembly 50 may be disposed inside the pole 20 and the base 10, and may support the plate 31 of the supporter 30 while being disposed on the frame 10F of the base 10.

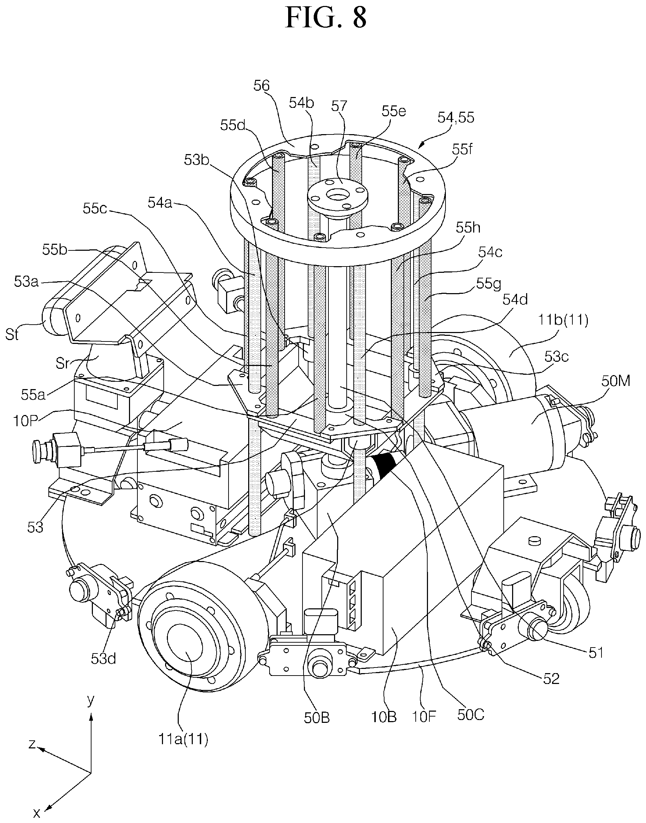

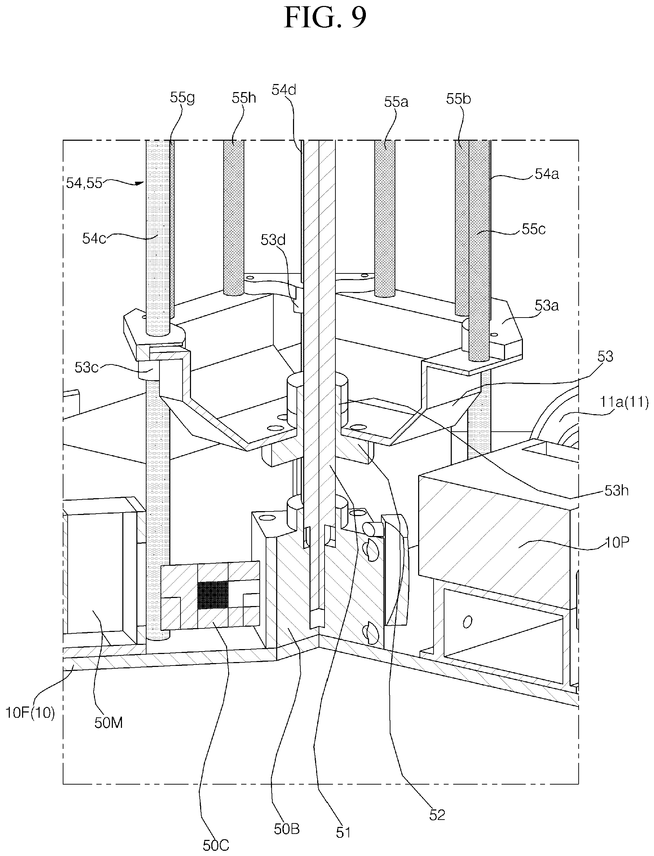

Referring to FIGS. 8 and 9, the lift assembly 50 may be located inside the pole 20 and the base 10. The lift assembly 50 may include a motor 50M, a coupling member 50C, a gear box 50B, a lead screws 51, a slider 52, a moving plate 53, a guide shaft 54, a support shaft 55, a fixing plate 56, and a cap 57.

The motor 50M may be mounted on the frame 10F of the base 10 and may provide a rotational force. The motor 50M may be an electric motor capable of adjusting a rotation direction, a rotation angle, and a rotation speed.

The lead screw 51 may extend in the vertical direction while being positioned at or near the central portion of the frame 10F of the base 10. A lower end of the lead screw 51 may be connected to the gear box 50B mounted on the frame 10F of the base 10. The gear box 50B may be gear-connected to a rotation shaft of the motor 50M via the coupling member 50C, and may transmit the power of the motor 50M to the lead screw 51.

For example, a distal end of the coupling member 50C may be fixed to a worm, and the gear box 50B may include a worm wheel worm wheel engaged with the worm. The rotation axis of the motor 50M and the rotation axis of the worm may be parallel to the horizontal direction. The rotation axis of the worm wheel may be parallel to the vertical direction and the worm wheel may be fixed to a lower end of the lead screw 51. Accordingly, the lead screw 51 may rotate around the rotation axis of the worm wheel in response to the operation of the motor 50M.

In still another example, the end of the coupling member 50C may be fixed to a pinion, and the gear box 50B may include a bevel gear engaged with the pinion. A rotation axis of the motor 50M and the rotation axis of the pinion may be parallel to the horizontal direction. The rotation axis of the bevel gear may be parallel to the vertical direction and the bevel gear may be fixed to the lower end of the lead screw 51. Accordingly, the lead screw 51 may rotate about the rotation axis of the bevel gear in response to the operation of the motor 50M.

The slider 52 may have a general shape of a hollow cylinder hollow cylinder. The lead screw 51 may pass through the slider 52. A male thread may be formed on the outer circumferential surface of the lead screw 51, and the female thread formed on the inner circumferential surface of the slider 52 may be engaged with the male thread. The slider 52 may be referred to as a lead nut 52, a ball nut 52, or a screw jack 52.

The moving plate 53 may include a hole 53h in which the slider 52 is positioned. The moving plate may extend from the slider 52 in the radial direction of the slider 52. The moving plate 53 may be coupled to the slider 52. Alternatively, the moving plate 53 and the slider 52 may be formed into one body. The moving plate 53 may have a general cup shape. The edge of the moving plate 53 may have an 8-sided edge. The moving plate 53 may be referred to as a lower plate 53.

The guide shaft 54 may extend in the longitudinal direction (i.e., the vertical direction) of the lead screw 51. A lower end of the guide shaft 54 may be coupled or fixed to the frame 10F of the base 10. The moving plate 53 may be coupled to the guide shaft 54 to be movable in the longitudinal direction of the guide shaft 54. A plurality of guide shafts 54a, 54b, 54c, and 54d may be spaced apart from each other along the edge of the moving plate 53. The first guide shaft 54a may be opposite to the third guide shaft 54c with respect to the lead screw 51. The second guide shaft 54b may be opposite to the fourth guide shaft 54d with respect to the lead screw 51. The guide shaft 54 may be referred to as a bottom guide bar 54.

The guide bush may be fixed to the moving plate 53 and may surround the outer circumferential surface of the guide shaft 54. A first guide bush 53a may be fixed to a first side of the moving plate 53, and may surround an outer circumferential surface of the first guide shaft 54a extending through a first portion of the moving plate 53. A second guide bush 53b may be fixed to a second side of the moving plate 53, and may surround the outer circumferential surface of the second guide shaft 54b extending through a second portion of the moving plate 53. A third guide bush 53c may be fixed to a third side of the moving plate 53, and may surround an outer circumferential surface of the third guide shaft 54c extending through a third portion of the moving plate 53. A fourth guide bush 53d may be fixed to a fourth side of the moving plate 53, and may surround an outer circumferential surface of the fourth guide shaft 54d extending through a fourth portion of the moving plate 53.

The support shaft 55 may extend in the longitudinal direction (i.e., the vertical direction) of the lead screw 51. A lower end of the supporter shaft 55 may be fixed onto the moving plate 53. An upper end of the support shaft 55 may be fixed to a lower surface of the plate 31 of the supporter 30. The support shaft 55 may be adjacent to the edge of the moving plate 53 and may be adjacent to the guide shaft 54. A plurality of support shafts 55a, 55b, 55c, 55d, 55e, 55f, 55g, and 55h and the plurality of guide shafts 54a, 54b, 54c, and 54d may be alternately arranged with each other along the edge of the moving plate 53. The first support shaft 55a and the second support shaft 55b may be located between the fourth guide shaft 54d and the first guide shaft 54a. The third support shaft 55c and the fourth support shaft 55d may be located between the first guide shaft 54a and the second guide shaft 54b. The fifth support shaft 55e and the sixth support shaft 55f may be located between the second guide shaft 54b and the third guide shaft 54c. The seventh support shaft 55g and the eighth support shaft 55h may be located between the third guide shaft 54c and the fourth guide shaft 54d. The support shaft 55 may be referred to as a top guide bar 55.

The fixing plate 56 may be spaced apart from the moving plate 53 in the longitudinal direction (i.e., the vertical direction) of the lead screw 51, and the fixing plate 56 may have a general ring shape. An upper end of the guide shaft 54 may be fixed to the fixing plate 56. The plurality of guide shafts 54a, 54b, 54c, and 54d may be spaced apart from each other in the circumferential direction of the fixing plate 56, and may be fixed to the fixing plate 56. In this case, a rigidity of the guide shaft 54 may be improved. The fixing plate 56 may be referred to as the upper plate 56 or the middle plate 56.

The cap 57 may be positioned inwardly of the fixing plate 56, and an upper end of the lead screw 51 may be coupled to the cap 57. The cap 57 may be referred to as a stopper 57.

Accordingly, when the lead screw 51 rotates in response to the driving of the motor 50M, the slider 52 may linearly reciprocate along the lead screw 51. In this regard, the guide shaft 54 may prevent rotation of the moving plate 53 fixed to the lead screw 51 while guiding the vertical movement of the moving plate 53. In addition, the moving plate 53 fixed to the lead screw 51 may be close to or away from the fixing plate 56.

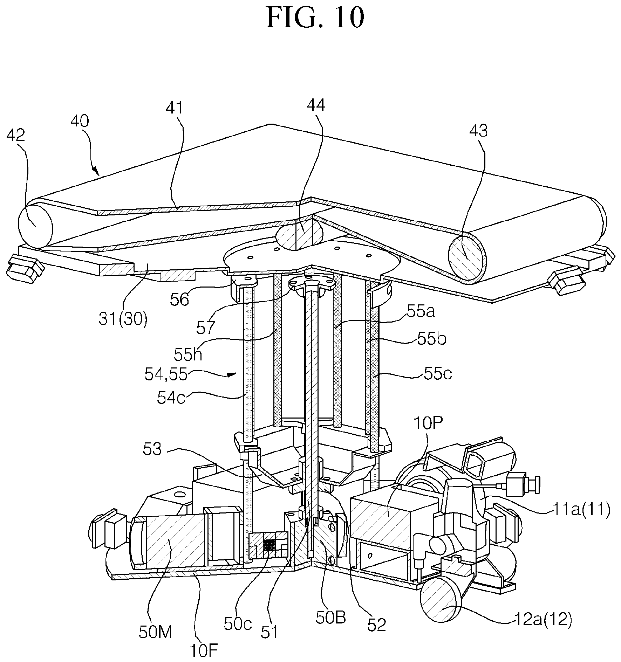

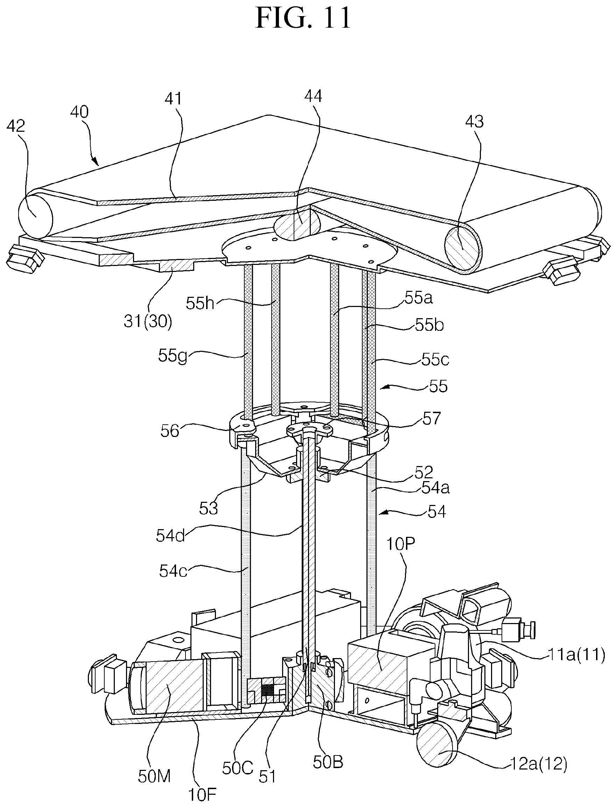

Referring to FIGS. 10 and 11, the motor 50M may rotate the lead screw 51 in the first rotation direction or the second rotation direction opposite to the first rotation direction through the gear(s) fixed to the rotation shaft of the motor 50M.

When the lead screw 51 is rotated in the first rotational direction, the slider 52 and the moving plate 53 may move upwardly along the lead screw 51. Accordingly, the support shaft 55 fixed on the moving plate 53 may also move upwards, and the tray 30 and 40 fixed to the upper end of the support shaft 55 may rise. The rise of the tray 30 and 40 may be limited by the upper end of the slider 52 being in contact with the lower end of the cap 57. Alternatively, the rise of the tray 30 and 40 may be limited by the upper surface of the moving plate 53 being in contact with the lower surface of the fixing plate 56.

When the lead screw 51 is rotated in the second rotational direction, the slider 52 and the moving plate 53 may move downwards along the lead screw 51. Accordingly, the support shaft 55 fixed on the moving plate 53 may also move downwards, and the tray 30 and 40 fixed to the upper end of the support shaft 55 may descend. The downward movement of the tray 30 and 40 may be limited by the plate 31 constituting the bottom of the tray 30 and 40 contacting the upper surface of the fixing plate 56.

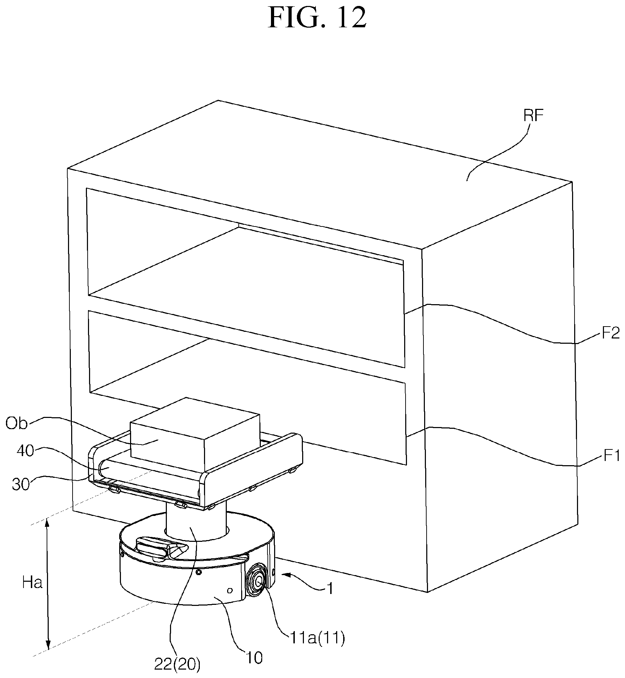

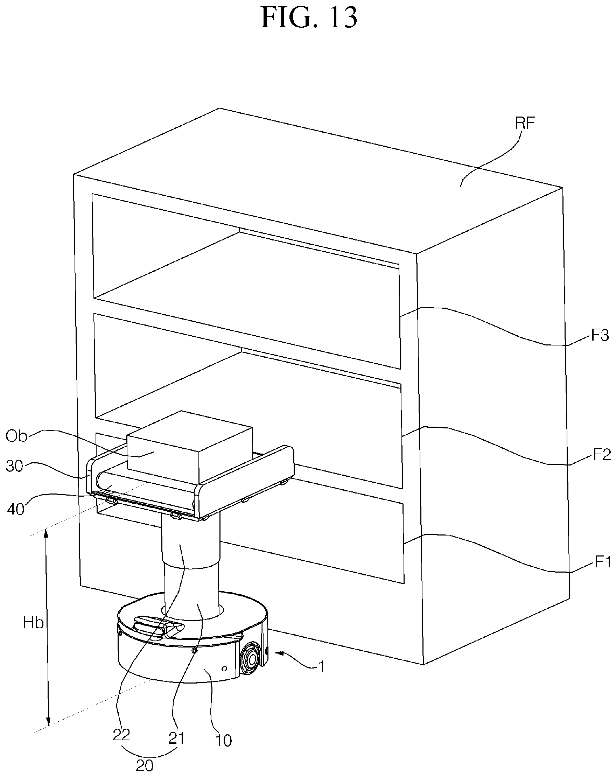

Referring to FIGS. 12 and 13, the controller of the robot 1 may move the robot 1 based on the information about the surroundings of the robot 1 obtained by the sensor(s) described above. The robot 1 on which the object Ob is loaded may move toward the shelf or the rack RF.

Referring to FIGS. 10 and 12, the robot 1 may be used to transport an object Ob to a first floor shelf F1 of the rack RF. To this end, the tray 30 and 40 of the robot 1 may have a minimum vertical level Ha from the ground on which the base 10 is placed, and the object Ob may be transferred by the conveyor 40 to the first floor shelf F1.

Referring to FIGS. 11 and 13, the robot 1 may be used to transport an object Ob to a second floor shelf F2 of the rack RF. To this end, the tray 30 and 40 of the robot 1 may have a maximum vertical level Hb from the ground on which the base 10 is placed, and the object Ob may be transferred to the second shelf F2 by the conveyor 40.

The vertical level of the tray 30 and 40 may vary between the minimum vertical level Ha and the maximum vertical level Hb. The vertical level of the tray 30 and 40 may be calculated based on information about the distance between the supporter 30 and the base 10, which is obtained by the proximity sensors Va, Vb, Vc, Vd, Ve, Vf, Vg, Vh, Vi, Vj (see FIGS. 1 and 7). The pole 20 may be elongated or shortened in response to the vertical level adjustment of the tray 30 and 40. The pole 20 may include an inner sleeve 21 fixed to the base 10 and an outer sleeve 22 fixed to the supporter 30. The outer sleeve 22 may surround the outer circumferential surface of the inner sleeve 21 and may be movable in a vertical direction.

In one example, the user may adjust the vertical level of the tray 30 and 40 of the robot 1 carrying the specific object Ob to a specific vertical level.

Alternatively, the robot 1 may sense the position of the shelf of the rack RF on which the object Ob is suitable for being placed using the sensor(s), and may adjust the vertical level of the tray 30 and 40 based on the sensed position.

Alternatively, the robot 1 may include a reader capable of reading an identification mark such as a barcode marked on the object Ob on the conveyor 40. The identification mark may include information on a vertical level of a place where the object Ob is to be loaded. In this case, based on the information read by the reader, the robot 1 may automatically adjust the vertical level of the tray 30 and 40 in a corresponding manner to the vertical level of the object Ob.

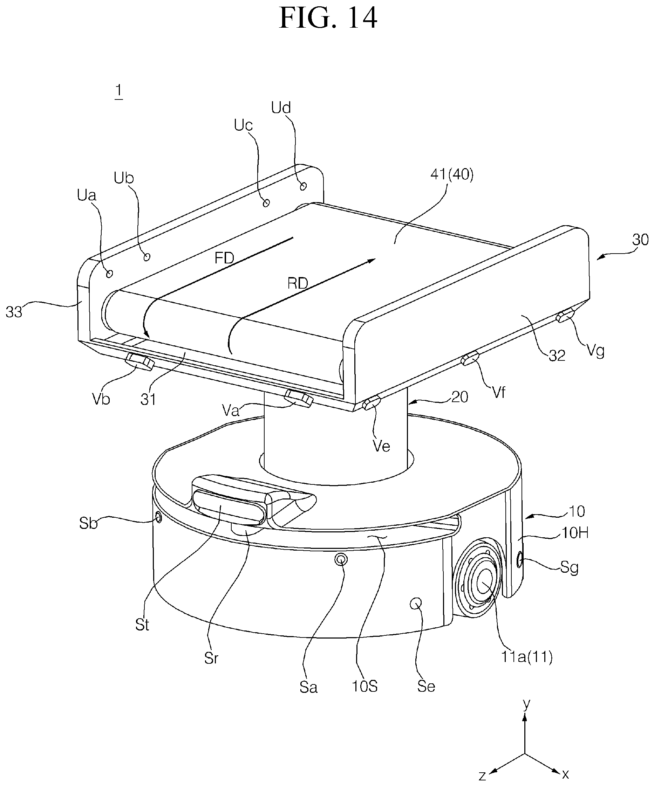

Referring to FIG. 14, the proximity sensor PS may be mounted on the first rib 32 or the second rib 33 of the supporter 30 and detect an object on the conveyor belt 41. The proximity sensor may include a light emitter that emits light in an infrared wavelength band and a light receiver to which light reflected from the object is input. Alternatively, the proximity sensor may be a photo sensor including a light emitter mounted on the first rib 32 and a light receiver mounted on the second rib 33. The proximity sensor may detect the presence or absence of an object approaching the proximity sensor. For example, the proximity sensor may include a plurality of proximity sensors Ua, Ub, Uc, and Ud mounted on the inner surface (i.e., the left side surface) of the second rib 33. The first proximity sensor Ua may be adjacent to a front end of the second rib 33, and the second proximity sensor Ub adjacent to the first proximity sensor Ua may be located farther from the front end of the second rib 33 than the first proximity sensor Ua may be. The fourth proximity sensor Ud may be adjacent to a rear end of the second rib 33, and the third proximity sensor Uc adjacent to the fourth proximity sensor Ud may be located farther from the rear end of the second rib 33 than the fourth proximity sensor Ud may be.

The conveyor belt 41 may rotate in the first direction FD and move the object on the conveyor belt 41 in a frontward direction. Alternatively, the conveyor belt 41 may rotate in the second direction RD and move the object on the conveyor belt 41 backwards.

For example, the object in rear of the conveyor belt 41 may be loaded on the conveyor belt 41 rotating in the first direction FD. In this case, when the object is sequentially (or simultaneously) detected by the fourth proximity sensor Ud and the third proximity sensor Uc, the robot 1 may detect that the object is placed on the conveyor belt 41. Subsequently, when the object is sequentially sensed by the second proximity sensor Ub and the first proximity sensor Ua, the robot 1 may sense that the object moves in the frontward direction along the conveyor belt 41.

In another example, the object in front of the conveyor belt 41 may be loaded on the conveyor belt 41 rotating in the second direction RD. In this case, when the robot is sequentially (or simultaneously) sensed by the first proximity sensor Ua and the second proximity sensor Ub, the robot 1 may sense that the object is placed on the conveyor belt 41. Subsequently, when the object is sequentially sensed by the third proximity sensor Uc and the fourth proximity sensor Ud, the robot 1 may detect that the object moves backwards along the conveyor belt 41.

Accordingly, the robot 1 may sense the object's loading or unloading using the plurality of proximity sensors Ua, Ub, Uc, and Ud.

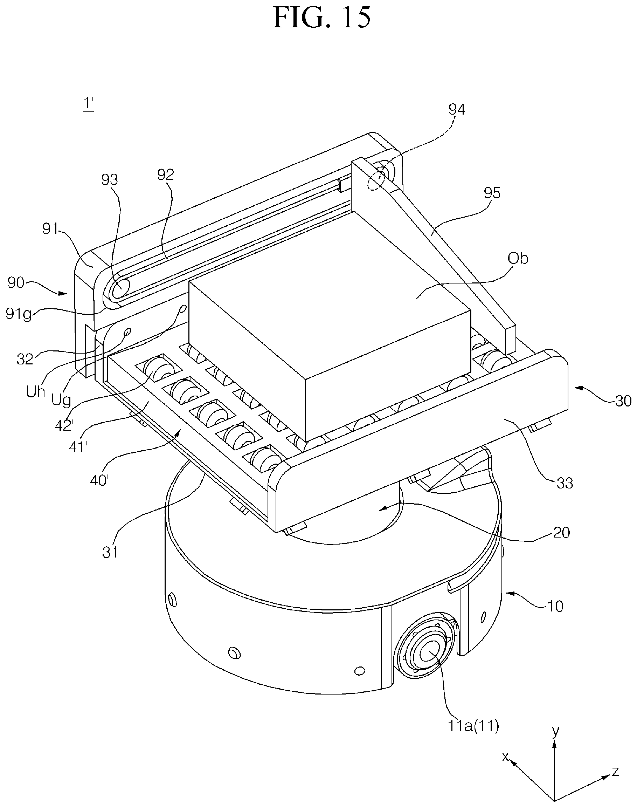

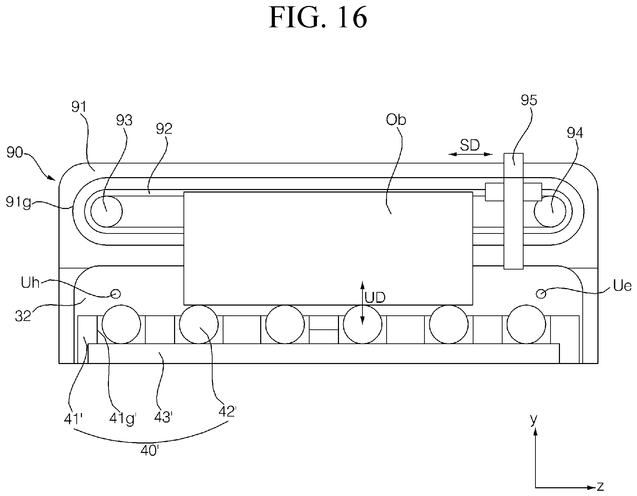

Referring to FIGS. 15 and 16, a conveyor 40' may be positioned on the plate 31, and may be positioned between the first rib 32 and the second rib 33. The conveyor 40' may include a frame 41', a rotating member 42', and an air pad 43'.

The frame 41' may have a general quadrangular plate shape. A plurality of holes HL may be formed in the upper surface of the frame 41', and the upper surface of the frame 41' having the holes HL defined therein may may have a grid pattern.

Each rotating member 42' may be inserted into each hole of the frame 41' and may be rotatable. The rotating member 42' may be a roller 42' or a ball 42'. Each of the plurality of rotation members 42' may be inserted into each of the plurality of holes of the frame 41'.

The air pad 43' may be inserted into a groove formed in the lower surface of the frame 41', and may support the rotating members 42' while being disposed on the plate 31. Air may be injected into the air pad 43' by a pump, or discharged to the outside from the air pad 43'.

When the air is injected into the air pad 43', a volume of the air pad 43' may increase, and the rotating member 42' on the air pad 43' may protrude upwardly beyond the upper surface of the frame 41'. In this case, the object Ob on the rotating member 42' may be easily moved by the rotating member 42'.

When the air is discharged from the air pad 43', the volume of the air pad 43' may be reduced, and the rotating member 42' on the air pad 43' may be inserted into the hole of the frame 41' from the position on top of the upper surface of the frame 41'. In this case, the object Ob on the upper surface of the frame 41' may not move well due to friction between the object Ob and the upper surface of the frame 41'.

A pushing module 90 may be mounted at the supporter 30 while being disposed adjacent to the first rib 32 or the second rib 33. The pushing module 90 may include a body 91, a belt 92, a first pulley 93, a second pulley 94, and a pusher 95. The body 91 may include a groove 91g in which the belt 92 and the pulleys 93 and 94 are mounted.

The first pulley 93 may be rotatably coupled to the groove 91g of the body 91 while being adjacent to the rear end of the body 91. A rotation axis of the first pulley 93 may intersect the first and second ribs 32 and 33. A rotation motor of the pushing module 90 may rotate the first pulley 93.

The second pulley 94 may be rotatably coupled to the groove 91g of the body 91 while being adjacent to the front end of the body 91. A rotation axis of the second pulley 94 may be parallel to the rotation axis of the first pulley 93.

The belt 92 may be wound around the first pulley 93 and the second pulley 94. For example, the belt 92 may be gear-connected or closely attached to the pulleys 93 and 94. The pusher 95 may be fixed to a portion of the belt 92. The pusher 95 may extend in a direction intersecting the first rib 32, and may be located on the conveyor 40'.

Accordingly, the rotation motor of the pushing module 90 may rotate the first pulley 93, and the belt 92 and the second pulley 94 may rotate in response to the rotation of the first pulley 93. When the belt 92 is rotated in the first rotational direction, the pusher 95 fixed to the belt 92 may move backwards on the conveyor 40'. When the belt 92 is rotated in the second rotational direction opposite to the first rotational direction, the pusher 95 fixed to the belt 92 may move in the frontward direction on the conveyor 40'. The moving direction of the pusher 95 may intersect the rotation axis of the rotation member 42'.

For example, the object Ob may be located on the conveyor 40', and the robot 1' may move toward a destination. In this case, the air may be discharged from the air pad 43' such that the rotating member 42' is inserted into the frame 41', and the object Ob may be seated on the upper surface of the frame 41'.

For example, the object Ob may be located on the conveyor 40', and the robot 1' may lower the object Ob to the destination. In this case, the air may be injected into the air pad 43' such that the rotating member 42' protrudes outwardly of the frame 41', and the object Ob may be seated on the rotating member 42'. The pusher 95 located in front of the object Ob may push the object Ob backwards. Alternatively, the pusher 95 located in rear of the object Ob may push the object Ob in the frontward direction.

In one example, the robot 1' may sense the loading or unloading of the object Ob using the plurality of proximity sensors Ue, Uf, Ug, and Uh. The description of the proximity sensors Ua, Ub, Uc, and Ud mounted on the second rib 33 as described above with reference to FIG. 14 may be applied to the proximity sensors Ue, Uf, Ug, and Uh mounted on the first rib 32.

Referring to FIGS. 1 to 16, a robot according to an aspect of the present disclosure may include: a base having a wheel; a tray spaced apart from the base; and a lift assembly disposed on the base so as to support the tray, wherein the lift assembly may include: a motor mounted in the base; a gear fixed to a rotation shaft of the motor; a lead screw extending longitudinally and rotatable in engagement with the gear; a guide shaft spaced apart from the lead screw in a direction intersecting a longitudinal direction of the lead screw and extending in the longitudinal direction of the lead screw; and a slider coupled to the lead screw and the guide shaft so as to be movable in the longitudinal direction of the lead screw, wherein the tray may be coupled to the slider and may be movable in the longitudinal direction of the lead screw together with movement of the slider.

The lift assembly may further include a moving plate extending from the slider outwardly of the slider and movably coupled to the guide shaft, wherein the guide shaft may include a plurality of guide shafts spaced apart from each other along an edge of the moving plate.

The lift assembly may further include a plurality of guide bushes fixed to the moving plate and spaced apart from each other along the edge of the moving plate, wherein each of the plurality of guide bushes may surround an outer circumferential surface of each of the plurality of guide shafts.

The lift assembly may further include a fixing plate spaced apart from the moving plate in the longitudinal direction of the lead screw, wherein ends of the plurality of guide shafts are fixed to the fixing plate, wherein the moving plate may be movable so as to be closer to or away from the fixing plate in response to an operation of the motor.

The fixing plate may overlap the moving plate in the longitudinal direction of the lead screw.

The lift assembly may further include a support shaft extending from the moving plate toward the tray and fixed to the tray, wherein the support shaft may include a plurality of support shafts, wherein the plurality of support shafts and the plurality of guide shafts are alternately arranged with each other.

The tray may include: a supporter coupled to the slider; and a conveyor positioned on the supporter.

The conveyor may include: a drive motor mounted at the supporter; a head pulley fixed to a rotation shaft of the drive motor; a tail pulley spaced apart from the head pulley; and a conveyor belt connecting the head pulley and the tail pulley to each other, wherein each of the head pulley and the tail pulley may be rotatable about an axis intersecting a movement direction of the tray.

The conveyor may include: an air pad having a variable volume; a frame positioned on the air pad and having a plurality of holes defined therein; and a plurality of rotation members respectively received in the plurality of holes and seated on the air pad, wherein the plurality of rotation members protrude outwardly of the plurality of holes or inserted into the plurality of holes according to the volume change of the air pad.

The robot may further include a pushing module adjacent to one side of the supporter and coupled to the supporter, wherein the pushing module may include a pusher movable on the frame and in a direction intersecting a rotation axis of the rotation member.

The pushing module may further include: a body coupled to the supporter; a rotation motor mounted at the body; a first pulley fixed to a rotation shaft of the rotation motor; a second pulley spaced apart from the first pulley in a moving direction of the pusher, and a belt connecting the first pulley and the second pulley to each other, wherein the pusher may be fixed to a portion of the belt.

The robot may further include a controller configured to control an operation of each of the conveyor and the pushing module, wherein in a mode in which the movement of the pusher is deactivated, the controller may be configured to cause the air to be discharged from the air pad so that the rotating member is inserted into the frame, in a mode in which the movement of the pusher is activated, the controller may be configured to cause the air to be injected into the air pad so that the rotating member protrudes outwardly of the frame.

The supporter may further include: a plate on which the conveyor is seated; a rib protruding from one side of the plate; and a proximity sensor mounted on one surface of the rib facing the side surface of the conveyor, wherein the proximity sensor may be configured to detect presence or absence of an object on the conveyor.

The conveyor may move the object located on the conveyor, wherein the proximity sensor may include a plurality of proximity sensors spaced apart from each other in a movement direction of the object.

The robot may further include: a sensor for sensing surroundings around the robot; and a controller configured to control an operation of each of the wheel and the motor, based on information obtained from the sensor.

Certain or other embodiments of the present disclosure described above are not exclusive or distinct from each other. Respective configurations or functions of certain embodiments or other embodiments of the present disclosure described above may be used in the parallel manner with each other or may be combined with each other.

For example, it means that the A configuration described in certain embodiments and/or drawings may be combined with the B configuration described in other embodiments and/or drawings. In other words, even if the combination between the configurations is not directly explained, it means that the combination is possible except when the combination is specified as being impossible.

The above detailed description should not be construed as limiting in all aspects and should be considered by way of example. The scope of the present disclosure should be determined by a rational interpretation of the appended claims, and all changes within the equivalent scope of the present disclosure are included in the scope of the present disclosure.

## Claims

1. A robot comprising:
a base having a wheel;
a tray spaced apart from the base; and
a lift assembly disposed on the base so as to support the tray,
wherein the lift assembly includes:
a motor mounted in the base;
a gear fixed to a rotation shaft of the motor;
a lead screw extending longitudinally and rotatable in engagement with the gear;
a guide shaft spaced apart from the lead screw in a direction intersecting a longitudinal direction of the lead screw and extending in the longitudinal direction of the lead screw; and
a slider coupled to the lead screw and the guide shaft so as to be movable in the longitudinal direction of the lead screw,
wherein the tray is coupled to the slider and is movable in the longitudinal direction of the lead screw together with movement of the slider.

2. The robot of claim 1, wherein the lift assembly further includes a moving plate extending from the slider outwardly of the slider and movably coupled to the guide shaft,
wherein the guide shaft includes a plurality of guide shafts spaced apart from each other along an edge of the moving plate.

3. The robot of claim 2, wherein the lift assembly further includes a plurality of guide bushes fixed to the moving plate and spaced apart from each other along the edge of the moving plate,
wherein each of the plurality of guide bushes surrounds an outer circumferential surface of each of the plurality of guide shafts.

4. The robot of claim 2, wherein the lift assembly further includes a fixing plate spaced apart from the moving plate in the longitudinal direction of the lead screw, wherein ends of the plurality of guide shafts are fixed to the fixing plate,
wherein the moving plate is movable so as to be closer to or away from the fixing plate in response to an operation of the motor.

5. The robot of claim 4, wherein the fixing plate overlaps the moving plate in the longitudinal direction of the lead screw.

6. The robot of claim 2, wherein the lift assembly further includes a support shaft extending from the moving plate toward the tray and fixed to the tray,
wherein the support shaft includes a plurality of support shafts, wherein the plurality of support shafts and the plurality of guide shafts are alternately arranged with each other.

7. The robot of claim 1, wherein the tray includes:
a supporter coupled to the slider; and
a conveyor positioned on the supporter.

8. The robot of claim 7, wherein the conveyor includes:
a drive motor mounted at the supporter;
a head pulley fixed to a rotation shaft of the drive motor;
a tail pulley spaced apart from the head pulley; and
a conveyor belt connecting the head pulley and the tail pulley to each other,
wherein each of the head pulley and the tail pulley is rotatable about an axis intersecting a movement direction of the tray.

9. The robot of claim 7, wherein the conveyor includes:
an air pad having a variable volume;
a frame positioned on the air pad and having a plurality of holes defined therein; and
a plurality of rotation members respectively received in the plurality of holes and seated on the air pad,
wherein the plurality of rotation members protrude outwardly of the plurality of holes or inserted into the plurality of holes according to the volume change of the air pad.

10. The robot of claim 9, wherein the robot further comprises a pushing module adjacent to one side of the supporter and coupled to the supporter,
wherein the pushing module includes a pusher movable on the frame and in a direction intersecting a rotation axis of the rotation member.

11. The method of claim 10, wherein the pushing module further includes:
a body coupled to the supporter;
a rotation motor mounted at the body;
a first pulley fixed to a rotation shaft of the rotation motor;
a second pulley spaced apart from the first pulley in a moving direction of the pusher, and
a belt connecting the first pulley and the second pulley to each other,
wherein the pusher is fixed to a portion of the belt.

12. The robot of claim 1, wherein the robot further comprises a controller configured to control an operation of each of the conveyor and the pushing module,
wherein in a mode in which the movement of the pusher is deactivated, the controller is configured to cause the air to be discharged from the air pad so that the rotating member is inserted into the frame,
wherein in a mode in which the movement of the pusher is activated, the controller is configured to cause the air to be injected into the air pad so that the rotating member protrudes outwardly of the frame.

13. The robot of claim 1, wherein the supporter further includes:
a plate on which the conveyor is seated;
a rib protruding from one side of the plate; and
a proximity sensor mounted on one surface of the rib facing the side surface of the conveyor, wherein the proximity sensor is configured to detect presence or absence of an object on the conveyor.

14. The robot of claim 13, wherein the conveyor moves the object located on the conveyor,
wherein the proximity sensor includes a plurality of proximity sensors spaced apart from each other in a movement direction of the object.

15. The robot of claim 1, wherein the robot further comprises:
a sensor for sensing surroundings around the robot; and
a controller configured to control an operation of each of the wheel and the motor, based on information obtained from the sensor.
